# EUROPÄISCHE PATENTANMELDUNG

(11) **EP 1 775 809 A1**
(43) Veröffentlichungstag der Anmeldung: **18.04.2007**
(21) Anmeldenummer: 06019953.6
(22) Anmeldetag: 23.09.2006
(51) Int. Cl.: H02B 1/052

(54) **Elektrisches Installationsgerät**

(30) Priorität: 15.10.2005 DE 102005049292
(71) Anmelder: ABB PATENT GmbH, 68526 Ladenburg (DE)
(72) Erfinder: Körner, Joachim, 74889 Sinsheim (DE); Eppe, Klaus-Peter, 69429 Waldbrunn (DE)
(74) Vertreter: Miller, Toivo

(57) **Zusammenfassung**

Es wird ein elektrisches Installationsgerät beschrieben, mit einem Gehäuse, dass gegebenenfalls aus zwei Gehäusehälften zusammengesetzt ist, mit einer Befestigungsebene, an der Mittel zur Befestigung auf einer Hutprofiltragschiene (28) vorgesehen sind, mit wenigstens einer beweglichen Nase (25), die hinter eine Längskante (26) der Hutprofiltragschiene (28) rastbar ist, wobei an der Befestigungsfläche (12) wenigstens im Bereich einer hinteren Schmalseitenwand (11) ein die bewegliche Nase (25) tragender langgestreckter Schieber 24 vorgesehen ist, der parallel zur Befestigungsfläche (12), senkrecht zur hinteren Schmalseitenwand (11) und zur Längserstreckung der Hutprofiltragschiene (28) verläuft und über wenigstens zwei Stege (17,18) mit der Befestigungsfläche (12) einstückig verbunden ist, die im Ruhezustand senkrecht zur Befestigungsfläche (12) und parallel zur hinteren Schmalseitenwand (11) verlaufen.

## Beschreibung

Die Erfindung betrifft ein elektrisches Installationsgerät, insbesondere einen Leitungsschutzschalter, gemäß dem Oberbegriff des Anspruchs 1.

Installationsverteilungen, insbesondere Hausinstallationsverteilungen, nehmen diejenigen Installationsschaltgeräte auf, die beispielsweise für eine Hausinstallation erforderlich sind. Diese sind zum Beispiel Leitungsschutzschalter, Fehlerstromschutzschalter und dergleichen. In diesen Installationsverteilungen sind zur Halterung der Installationsgeräte Hutprofilschienen angeordnet, die horizontal verlaufen und von denen normalerweise zwei übereinander angeordnete Hutprofiltragschienen vorhanden sind. Derartige Hutprofiltragschienen besitzen einen U-förmigen Grundkörper; an den Schenkelenden sind nach außen abgewinkelte Leisten oder Flansche angeformt, die in einer Ebene liegen, die parallel zum Steg der U-Form verläuft.

Die Installationsgeräte-es sei beispielhaft auf einen Leitungsschutzschalter Bezug genommen-besitzen an ihrer Befestigungsebene eine Ausnehmung, in der sich eine feststehende Nase und eine bewegliche Nase befinden. Beide Nasen zeigen auf einander zu, und zur Montage wird der Leitungsschutzschalter mit seiner feststehenden Nase hinter die obere Längskante der Hutprofiltragschiene eingehängt und sodann der Leitungsschutzschalter auf die Hutprofilschiene zu bewegt, wobei die bewegbare Nase zunächst von der unteren Längskante der Hutprofiltragschiene weggedrückt wird und danach in ihre Endstellung hinter die untere Längskante einrastet. Dabei ist die Hutprofiltragschiene innerhalb des Installationsverteilers so angeordnet, dass die Flächen der Leisten beziehungsweise der Steg der U-Form vertikal ausgerichtet sind.

Ähnliche Anordnungen sind auch in Niederspannungsschaltanlagen vorgesehen, in denen sich beispielsweise in bestimmten Bereichen Hutprofiltragschienen befinden, auf welche elektrische Installationsgeräte aufgerastet bzw. aufgeschnappt werden, was neben den Leitungs- und Fehlerstromschutzschaltem auch für Motorschutzschalter, Steuer- und Regelgeräte gilt. Bei der überwiegenden Zahl der Installationsgeräte befindet sich an der Befestigungsfläche ein sich längs erstreckender Schieber, an dessen in die Ausnehmung hinein ragendem Ende die bewegliche Nase angeformt oder angeordnet ist. Der Schieber steht dabei unter dem Druck einer Feder, die den Schieber in Richtung zur feststehenden Nase hin drückt. Dabei kann der Schieber aus Stahlblech oder aus Kunststoff hergestellt sein.

Bei einer bestimmten Ausführung ist der Schieber aus dem gleichen Material hergestellt wie das Gehäuse des Installationsgerätes und mit diesem über eine Biegefeder verbunden, wobei der Schieber mit der Feder dem Gehäuse so zugeordnet ist, dass im Ruhezustand der Abstand der beweglichen Nase zur feststehenden Nase kleiner ist als der Abstand der beiden Längskanten der Hutprofiltragschiene, siehe EP 0 602 305 A1. Bei dieser Ausgestaltung besteht allerdings das Problem, dass die Gesamtheit Gehäuse plus Schieber so ausgerichtet ist, dass eine einfache Entformung, das heißt ein einfaches Herausnehmen aus der Form, nicht möglich ist. Vielmehr werden bei dieser Ausgestaltung sogenannte Schieber im Werkzeug benötigt, die immer einen erhöhten Aufwand bedeuten.

Aufgabe der Erfindung ist es, ein elektrisches Installationsschaltgerät zu schaffen, bei dem die Herstellung vereinfacht ist.

Diese Aufgabe wird erfindungsgemäß gelöst durch die Merkmale des Anspruches 1.

Erfindungsgemäß also ist an der Befestigungsfläche wenigstens im Bereich einer hinteren Schmalseitenwand ein die bewegliche Nase tragender, lang gestreckter Schieber vorgesehen, der parallel zur Befestigungsfläche, senkrecht zur hinteren Schmalseitenwand und zur Längserstreckung der Hutprofiltragschiene verläuft und über wenigstens zwei Stege mit der Befestigungsfläche einstückig verbunden ist, die im Ruhezustand senkrecht zur Befestigungsfläche und parallel zur hinteren Schmalseitenwand verlaufen.

Der besondere Vorteil der erfindungsgemäßen Ausführungsform des Installationsgerätes besteht darin, dass das Gehäuse beziehungsweise die Gehäusehalbschale mit dem Schieber in einem Werkzeug hergestellt werden kann, bei dem sogenannte Schieberelemente, die quer zur Hauptausformrichtung verlaufen nicht mehr erforderlich sind, wodurch die Herstellung erheblich vereinfacht ist.

Gemäß einer vorteilhaften Ausgestaltung der Erfindung kann im Bereich der beweglichen Nase am Gehäuse je eine im Bereich der Längskante des Schiebers angeordnete Leiste vorgesehen sein, die im Bereich der Längskante der Hutprofiltragschiene liegt und eine Verdrehung des Gehäuses zum Beispiel bei Betätigung einer Klemmschraube um eine etwa senkrecht zur Befestigungsfläche verlaufende Achse verhindert.

Wenn das Installationsgerät ein Gehäuse aus zwei schalenartigen Gehäusehälften aufweist, wobei der Schieber an einer Gehäusehalbschale angeformt ist, dann können am Schieber im Bereich einer parallel zur Trennebene der Gehäusehalbschalen verlaufenden Längsseite Führungstaschen vorgesehen sein, in die an der anderen Gehäusehalbschale angeformte Nocken eingreifen können.

Gemäß einer weiteren vorteilhaften Ausgestaltung der Erfindung kann zwischen den Stegen am Schieber und an der Gehäusehalbschale eine aus zwei Rastnasen gebildete Verrastung vorgesehen sein, die geeignet ist, den Schieber in einer Stellung festzuhalten, in der das Installationsgerät von der Hutprofiltragschiene abnehmbar ist.

Der Schieber, die Taschen, die Verrastung sowie die Stege sind dabei einander so zugeordnet, dass eine querschieberfreie Werkzeugform ermöglicht ist.

Anhand der Zeichnung, in der einige Ausführungsbeispiele der Erfindung dargestellt sind, sollen die Erfindung, weitere Ausgestaltungen und Verbesserungen der Erfindung sowie weitere Vorteile näher erläutert und beschrieben werden.

Es zeigen
- Fig.1: eine perspektivische Darstellung einer ersten Ausführungsform der Erfindung,
- Fig.2: eine weitere Ausführungsform der Erfindung und
- Fig.3: eine perspektivische Darstellung eines zur Erfindung gehörigen Details.

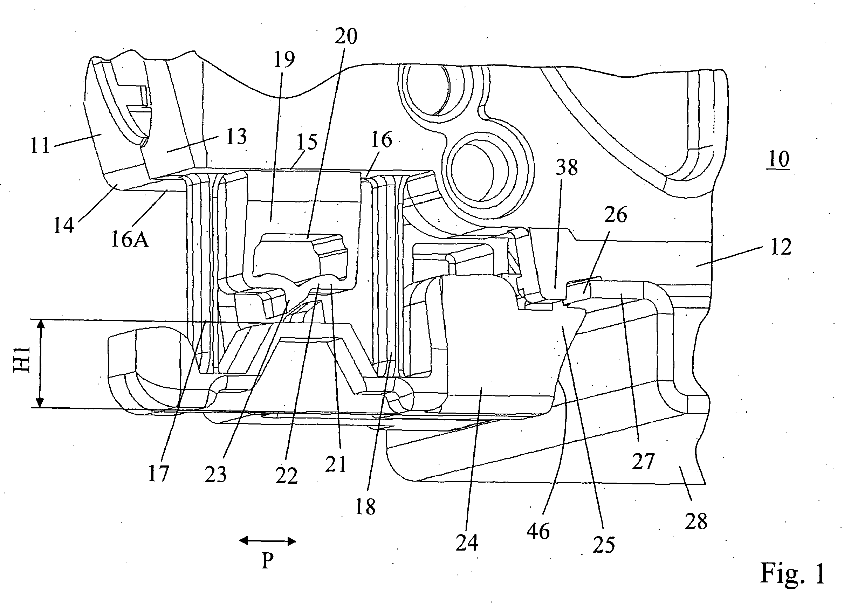

Es sei nun Bezug genommen auf die Fig.1.
Die Fig.1 zeigt einen Teil eines Leitungsschutzschalters im Bereich der Befestigungsseite.

Jeder Leitungsschutzschalter besitzt eine vordere und zwei hintere Frontflächen sowie zwei vordere und zwei hintere Seitenflächen; die hinteren Frontflächen sind über die beiden vorderen Seitenflächen mit der vorderen Frontfläche verbunden und die hinteren Seitenflächen sind mit der Befestigungsfläche ebenfalls verbunden, so dass sich eine etwa T-förmige Sockelbauweise ergibt.

Die Fig.1 zeigt einen Leitungsschutzschalter 10 und von diesem Leitungsschutzschalter nur einen Teil der einen hinteren Seitenfläche 11 sowie einen Teilabschnitt der Befestigungsfläche 12. Das Gehäuse des Leitungsschutzschalters, in dem in üblicher Weise zur Abschaltung dienende Komponenten unterbracht sind, ist aus zwei Gehäusehalbschalen 13 und 14 hergestellt, die mit den Endkanten der Seitenwände gegeneinander gelegt und mittels geeigneter Verbindungen miteinander verbunden sind.

Im Bereich der hinteren Seitenwand 11 befindet sich ein Absatz oder eine Stufe 15, in dem eine Absatzfläche 16 gebildet ist, an welcher zwei senkrecht dazu verlaufende Stege 17 und 18 angeformt sind, und zwar an der Gehäusehalbschale 13. Zwischen den beiden Stegen 17 und 18 befindet sich ein Körper 19, der an der Gehäusehalbschale 13 angeformt ist und eine etwa rechteckige Aussparung 20 aufweist, wodurch eine U-förmige Federwand 21 anschließt, deren parallel zur Ebene 16 verlaufender Wandungsabschnitt 22 auf seiner Außenseite eine erste Rastnase 23 trägt.

An den freien Enden der Stege 17, 18 ist ein Schieber 24 angeformt. Der Schieber 24 ist etwa langgestreckt rechteckig; über die genaue Form wird weiter unten näheres ausgesagt. Die Richtung der Erstreckung der längeren Seite des Schiebers 24 verläuft in Richtung der Befestigungsfläche 12; die Stege 17 und 18 sind als Flachstege einander zugeordnet, deren Ebenen bzw. Flachseiten jeweils parallel zur hinteren Seitenwand 11 verläuft, so dass der Schieber 24 in Doppelpfeilrichtung P hin und her bewegbar ist, wobei sich bei dieser Hin- und Herbewegung die Stege 17, 18 verformen.

An dem Ende des Schiebers 24, das entgegengesetzt dem Ende liegt, das sich im Bereich der hinteren Schmalseite 11 befindet, ist eine Nase 25 angeformt, die eine sogenannte bewegbare Nase ist und die im montierten Zustand hinter die Längskante 26 eines Flansches 27 einer Hutprofiltragschiene 28 greift, wie in Fig.1 dargestellt ist.

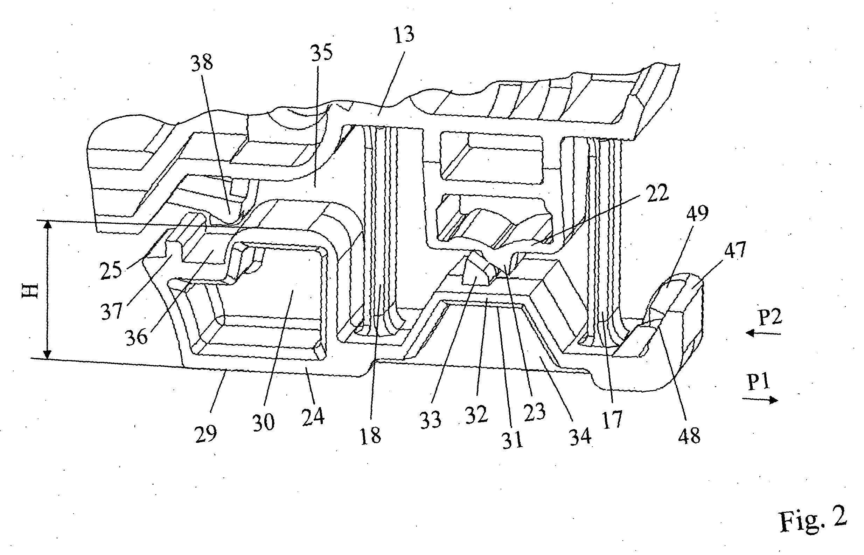

Die Fig.2 zeigt die Anordnung gemäß Fig.1 von der Rückseite, insoweit als zumindest teilweise ins Innere der Gehäusehalbschale 13 hineingeblickt wird. Der Schieber 24 mit der Nase 25 besitzt einen nasennahen Abschnitt 29, der sich zwischen der bewegbaren Nase 25 und dem Steg 18 befindet und der eine erste Höhe H aufweist, die gegenüber den übrigen Bereich des Schiebers 24 vergrößert ist. Auf der dem Betrachter zugewandten Seite, das heißt auf der Seite des Schiebers 24, die der anderen Gehäusehalbschale zugewandt ist, besitzt der Schieber im Bereich des Abschnittes 29 eine Tasche 30, die einen geschlossenen Taschennapf bildet, deren Aufgabe weiter unten näher beschrieben ist. Im Bereich des Anschlusses der Stege 17, 18 entspricht die Dicke des Schiebers, gemessen in Längsrichtung der Stege 17, 18 lediglich einem Bruchteil der Höhe H, wobei zwischen den Stegen 17 und 18 ein zweiter Vorsprung 31 vorgesehen ist, dessen Höhe H₁ etwa die Hälfte der Höhe H beträgt. Der Vorsprung 31 besitzt eine Trapezform und seine der Gehäusehalbschale 13 zugewandte kleinere Trapezfläche 32 trägt eine Rastnase 33, die mit der Rastnase 23 in weiter unten dargestellten Weise zusammen wirkt. Im Bereich des Vorsprunges 31 befindet sich eine zweite Tasche 34, die eine zur freien Schieberfläche offene, trapezförmige Napfform bildet. Die Aufgabe dieser zweiten Tasche 34 ist weiter unten näher erläutert.

An dem Vorsprung 29 ist eine der Gehäusehalbschale 13 zugewandte Abschlussfläche 35 gebildet, deren Höhe von der freien Fläche des Schiebers ausgemessen der Höhe H entspricht. Zwischen der Fläche 35 und der bewegbaren Nase 25 ist eine Stufe 36 gebildet, an deren Stufenfläche eine Leiste 37 angeformt ist, die senkrecht zur Stufenfläche 36 verläuft.

Im Bereich der Stufung zwischen der Befestigungsfläche 12 und der Rücksprungsflache 16 ist eine senkrecht zur Befestigungsfläche 12 vorspringende zweite Leiste 38 angeformt, gegen die die freie Kante 26 der Hutprofiltragschiene im montierten Zustand zum Anliegen kommt, wenn aus bestimmten Gründen auf den Leitungsschutzschalter eine Kraft ausgeübt wird, die ein Drehmoment erzeugt, welches eine Drehung um eine senkrecht zur Befestigungsfläche verlaufende Drehachse erzeugt. Im montierten Fall wird die Leiste 37 gegen die Längskante 26 der Hutprofiltragschiene 28 zum Anliegen kommen.

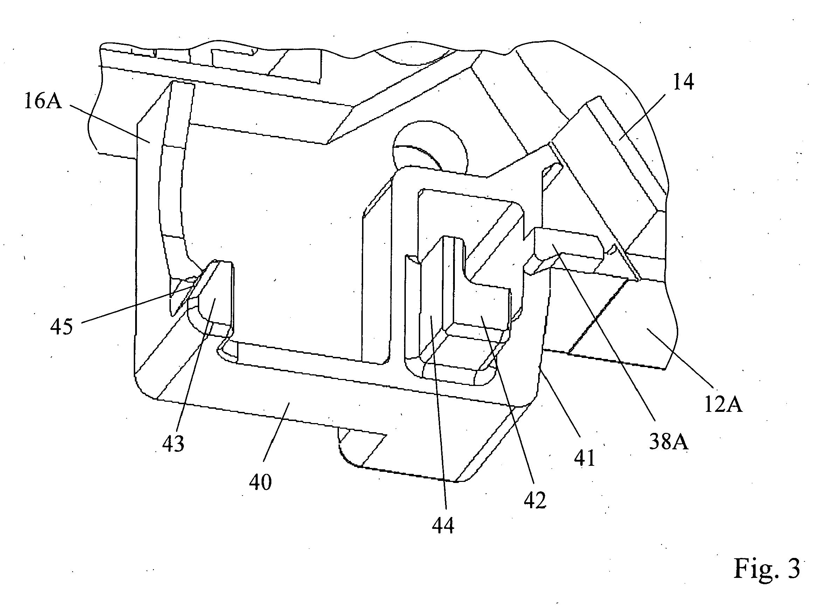

Die Fig.3 zeigt eine perspektivische Ansicht auf die Gehäusehalbschale 14 im Bereich des Schiebers bei abgenommener Gehäusehalbschale 13. An der Rücksprungfläche 16A schließt ein Gehäusevorsprung 40 an, der die Befestigungsfläche 12A überragt und eine Anschlagfläche 41 für die Hutprofiltragschiene bilden kann. An dem Gehäuseschalenvorsprung 40 sind zwei Haltevorsprünge 42 und 43 angeformt, die zum Schieber hinweisen, also die parallel zur Längserstreckung der Tragschiene 28 vorspringen. Der Vorsprung 42 greift in die Tasche 30 und der Vorsprung 43 in die Tasche 34. Die Lage der Vorsprünge 42, 43 ist bezogen auf die befestigungsseitige Wandung der Taschen 30, 34, so bemessen, dass dann, wenn an dem Leitungsschutzschalter bei der Demontage des Leitungsschutzschalter eine zu große Kraft senkrecht zur Befestigungsfläche ausgeübt wird, der Schieber über die beiden Vorsprünge 42, 43 eine Bewegungsbegrenzung erhält. Ebenso wirken die befestigungsflächenabseitigen Wandungen 44, 45 an den Vorsprüngen 42, 43 einer unsachgemäßen Kraft entgegen, die beim Drücken der Schnellbefestigung, das heißt des Schiebers, in bestimmten Fällen aufgebracht werden kann.

Die im Bereich der bewegbaren Nase 25 befindliche Führungsfläche 46 ist am Schieber etwa kurvenförmig bzw. bogenförmig ausgebildet, so dass das Aufschnappen dadurch vereinfacht und erleichtert wird und dass die Längskante entlang dieser Führungsfläche 46 besser gleiten kann.

Das der Nase 25 entgegengesetzt liegende Ende des Schiebers besitzt eine L-förmige Anformung 47, die eine Abschrägung 48 sowie eine senkrecht zur Anformung 47 und zu der Schieberfläche verlaufende bogenförmige Rippe 49 aufweist; dies hat zur Folge, dass dann, wenn bei unsachgemäßer Betätigung des Schiebers mittels eines Werkzeuges Kräfte aufgebracht werden, die schädlich für die Anordnung sind, das Werkzeug über die Schrägfläche 48 beziehungsweise die bogenförmige Rippe 49 abrutschen kann.

Wenn nun der Schalter 10 von der Hutprofiltragschiene entfernt werden soll, dann wird der Schieber 24 mittels eines Werkzeuges in Pfeilrichtung P1 gezogen; dadurch entfernt sich die bewegbare Nase 25 von der Hutprofiltragschiene und das Schaltgerät kann entnommen werden.

Damit der Leitungsschutzschalter entnommen werden kann, sind die Nasen 22 und 33 vorgesehen; mittels des Werkzeuges wird der Schieber 24 solange in Pfeilrichtung P1 gezogen, bis die Nase 33 über die Nase 22 gerutscht ist und sich, bezogen auf die Nase 25, hinter der Nase 22 befindet. Zu diesem Zwecke ist die Wandung 22 aufgrund der Durchbiegung 20 federnd.

Um das Gerät wieder montieren zu können, wird der Schieber manuell in Pfeilrichtung P2 gedrückt, so dass die Rastnase 32 wieder in die in Fig.2 Stellung bewegt wird, so dass sich die Nase 33, bezogen auf die bewegbare Nase 25 vor der Nase 22, befindet.

## Patentansprüche

1. Elektrisches Installationsgerät, mit einem Gehäuse, dass gegebenenfalls aus zwei Gehäusehälften zusammengesetzt ist, mit einer Befestigungsebene, an der Mittel zur Befestigung auf einer Hutprofiltragschiene (28) vorgesehen sind, mit wenigstens einer beweglichen Nase (25), die hinter eine Längskante (26) der Hutprofiltragschiene (28) rastbar ist, **dadurch gekennzeichnet, dass** an der Befestigungsfläche (12) wenigstens im Bereich einer hinteren Schmalseitenwand (11) ein die bewegliche Nase (25) tragender langgestreckter Schieber 24 vorgesehen ist, der parallel zur Befestigungsfläche (12), senkrecht zur hinteren Schmalseitenwand (11) und zur Längserstreckung der Hutprofiltragschiene (28) verläuft und über wenigstens zwei Stege (17,18) mit der Befestigungsfläche (12) einstückig verbunden ist, die im Ruhezustand senkrecht zur Befestigungsfläche (12) und parallel zur hinteren Schmalseitenwand (11) verlaufen.

2. Installationsgerät nach Anspruch 1, **dadurch gekennzeichnet, dass** im Bereich der beweglichen Nase am Gehäuse je eine im Bereich der Längskante des Schiebers (24) angeordnete Leiste (38) vorgesehen ist, die in dem Bereich der Längskante der Hutprofiltragschiene (28) liegt und eine Verdrehung des Gehäuses zum Beispiel bei Betätigung einer Klemmschraube um eine etwa senkrecht zur Befestigungsfläche (12) verlaufende Achse verhindert.

3. Installationsgerät nach einem der Ansprüche 1 und 2, dessen Gehäuse aus zwei schalenartigen Gehäusehälften (13, 14) zusammengesetzt ist, wobei der Schieber an einer Gehäusehalbschale (13) angeformt ist, **dadurch gekennzeichnet, dass** am Schieber (24) im Bereich einer parallel zur Trennebene der Gehäusehalbschalen (13, 14) verlaufenden Längsseite Führungstaschen (30, 31) vorgesehen sind, in die an der anderen Gehäusehalbschale (14) angeformte Nocken (42, 43) eingreifen.

4. Installationsgerät nach einem der vorigen Ansprüche, **dadurch gekennzeichnet, dass** zwischen den Stegen (17, 18) am Schieber (24) und an der Gehäusehalbschale (13) eine aus zwei Rastnasen (22, 33) gebildete Verrastung vorgesehen ist, die geeignet ist, den Schieber (24) in einer Stellung festzuhalten, in der das Installationsgerät von der Hutprofiltragschiene (28) abnehmbar ist.

5. Installationsgerät nach einem der vorigen Ansprüche, **dadurch gekennzeichnet, dass** das der beweglichen Nase (25) entgegengesetzte Ende des Schiebers (24) mit einer Schrägfläche (48, 49) versehen ist, entlang derer ein Werkzeug bei unsachgemäßer Bedienung abrutschen kann.

6. Installationsgerät nach einem der vorigen Ansprüche, **dadurch gekennzeichnet, dass** der Schieber, die Taschen, die Verrastung sowie die Stege so einander zugeordnet sind, dass eine querschieberfreie Werkzeugform ermöglicht ist.
